# FASCICULE DE BREVET EUROPEEN

(11) **EP 1 362 343 B1**
(45) Date de publication et mention de la délivrance du brevet: **29.08.2007**
(21) Numéro de dépôt: 02703691.2
(22) Date de dépôt: 12.02.2002
(51) Int. Cl.: G10L 15/26

(54) **PROCEDE, MODULE, DISPOSITIF ET SERVEUR DE RECONNAISSANCE VOCALE**
VERFAHREN, MODUL, VORRICHTUNG UND SERVER ZUR SPRACHERKENNUNG
METHOD, MODULE, DEVICE AND SERVER FOR VOICE RECOGNITION

(30) Priorité: 13.02.2001 FR 0101910
(43) Date de publication de la demande: 19.11.2003
(73) Titulaire: Thomson Licensing, 92100 Boulogne-Billancourt (FR)
(72) Inventeur: SOUFFLET, Frédéric, F-35410 Chateaugiron (FR); TAZINE, Nour-Eddine, F-35530 Noyal Sur Vilaine (FR)
(74) Mandataire: Kohrs, Martin
(86) Numéro de dépôt international: PCT/FR2002/000518
(87) Numéro de publication internationale: WO 2002/065454

(56) Documents cités:
- EP-A- 0 945 851
- EP-A- 1 047 046
- WO-A-00/23985
- US-A- 5 852 801
- US-A- 5 953 700
- US-A- 5 956 683
- US-A- 6 157 910

## Description

La présente invention se rapporte au domaine des interfaces vocales.

Plus précisément, l'invention concerne l'optimisation de modèles de langage et/ou d'unités phonétiques dans des terminaux utilisant la reconnaissance vocale.

Les systèmes d'information ou de contrôle utilisent de plus en plus souvent une interface vocale pour rendre l'interaction avec l'utilisateur, plus rapide et/ou intuitive. Ces systèmes devenant de plus en plus complexes, les exigences en termes de reconnaissance vocale sont de plus en plus importantes, tant en ce qui concerne l'étendue de la reconnaissance (très large vocabulaire) que la rapidité de la reconnaissance (temps réel).

On connaît dans l'état de la technique des procédés de reconnaissance vocale basés sur l'utilisation de modèles de langages (probabilité pour qu'un mot donné du vocabulaire de l'application suive un autre mot ou groupe de mots dans l'ordre chronologique de la phrase) et d'unités phonétiques. Ces techniques sont notamment décrites dans l'ouvrage de Frederik Jelinek «Statistical methods for speech recognition » (ou en français «méthodes statistiques pour la reconnaissance vocale ») paru aux éditions MIT Press en 1997.

Ces techniques reposent sur des modèles de langages et des unités phonétiques qui sont produits à partir d'échantillons vocaux représentatifs (issus par exemple, d'une population d'utilisateurs d'un terminal auxquels on fait prononcer des commandes).

En pratique, les modèles de langage doivent tenir compte du style d'élocution ordinairement employé par un utilisateur du système, et notamment de ses « défauts » : hésitations, faux départs, changement d'avis, ...

La qualité d'un modèle de langage utilisé influe fortement sur la fiabilité de la reconnaissance vocale. Cette qualité est le plus souvent mesurée par un indice appelé perplexité du modèle de langage, et qui représente schématiquement le nombre de choix que le système doit réaliser pour chaque mot décodé. Plus cette perplexité est basse, meilleure est la qualité.

Le modèle de langage est nécessaire pour traduire le signal vocal en une suite textuelle de mots, étape souvent utilisée par les systèmes de dialogue. Il faut alors construire une logique de compréhension qui permette de comprendre la requête pour y répondre.

Il existe deux méthodes standard pour produire des modèles de langages à large vocabulaire :
- la méthode statistique dite en N-gram, le plus souvent en bigram ou trigram, qui consiste à supposer que la probabilité d'occurrence d'un mot dans la phrase dépend uniquement des N mots qui le précèdent, indépendamment du reste de son contexte dans la phrase.

Si l'on prend l'exemple du trigram pour un vocabulaire de 1000 mots, il faudrait définir 1000³ probabilités pour définir le modèle de langage, ce qui est impossible. Les mots sont alors groupés en ensembles, qui sont soit définis explicitement par le concepteur du modèle, soit déduits par des méthodes auto-organisatrices.

Ce modèle de langage est alors construit à partir d'un corpus de texte de façon automatique.

Ce type de modèle de langage est principalement utilisé pour les systèmes de dictée vocale dont la fonctionnalité ultime est de traduire le signal vocal en un texte, sans qu'une phase de compréhension soit nécessaire.
- la seconde méthode consiste à décrire la syntaxe au moyen d'une grammaire probabiliste, typiquement une grammaire non contextuelle définie grâce à un ensemble de règles décrites sous la forme «Backus Naur Form» ou BNF, ou une extension de cette forme à des grammaires contextuelles. Les règles décrivant les grammaires sont le plus souvent écrites à la main. Ce type de modèle de langage convient aux applications de commande et de contrôle, où la phase de reconnaissance est suivie d'une phase de contrôle d'un appareil ou de recherche d'information dans une base de donnée.

Le modèle de langage d'une application décrit l'ensemble des expressions (par exemple phrases) que l'application sera amenée à reconnaître. Un inconvénient de l'art antérieur est que, si le modèle de langage est de mauvaise qualité, le système de reconnaissance, même s'il est très performant au niveau décodage acoustico-phonétique, aura des performances médiocres sur certaines expressions.

Les modèles de langages de type stochastique n'ont pas, à proprement parler, une définition claire des expressions qui sont dans le modèle de langage, et de celles qui sont en dehors. Certaines expressions ont simplement une probabilité d'occurrence a priori plus forte que d'autres.

Les modèles de langage de type grammaire probabiliste proposent une différence claire entre expressions appartenant aux modèles de langage, et expressions externes au modèle de langage. Dans ces modèles, il existe donc des expressions qui ne pourront jamais être reconnues, quelle que soit la qualité des modèles phonétiques utilisés. Ce sont généralement des expressions n'ayant aucun sens ou qui portent un sens hors du domaine d'application du système développé.

Le document EP-A-945851 utilise un système client-serveur pour adapter le vocabulaire disponible et le distribuer à tous les clients lorsque l'un des clients désire ajouter un mot au vocabulaire.

Il s'avère que les modèles de langage de type probabiliste et leurs dérivés sont les plus efficaces pour les applications de commande et de contrôle. Ces grammaires sont souvent écrites à la main, une des difficultés principales du développement des systèmes de dialogues est de proposer un modèle de langage de bonne qualité.

En particulier, en ce qui concerne les modèles de type grammaire, il n'est pas possible de définir de manière exhaustive un langage en particulier si ce dernier est susceptible d'être utilisé par une large population (cas par exemple d'une télécommande pour appareils grand public). Il n'est pas possible de tenir compte de toutes les expressions et tournures possibles (du langage soutenu à l'argot), et/ou des erreurs de grammaire...

L'invention concerne un procédé et un système de reconnaissance vocale permettant de modifier et d'améliorer un modèle de langage à distance, à partir des enregistrements d'expressions non reconnues par le système.

Plus précisément, l'invention a pour objet un procédé de reconnaissance vocale mis en oeuvre dans au moins un terminal, le procédé de reconnaissance vocale utilisant un modèle de langage, remarquable en ce qu'il comprend les étapes suivantes :
- détection d'au moins une expression non reconnue dans l'un des terminaux;
- enregistrement dans le terminal de données représentatives de l'expression non reconnue ;
- transmission par le terminal des données enregistrées vers un serveur distant, via un premier canal de transmission ;
- analyse au niveau du serveur distant, des données et génération d'informations de correction du modèle de langage tenant compte d'au moins une partie des expressions non reconnues ; et
- transmission via un second canal de transmission du serveur vers au moins un terminal des informations de correction, afin de permettre une reconnaissance future d'au moins certaines des expressions non reconnues.

Ainsi, l'invention repose sur une approche tout à fait nouvelle et inventive de la reconnaissance vocale, qui permet de mettre à jour les différents éléments permettant la reconnaissance vocale en fonction d'expressions non reconnues localement, un serveur distant disposant de ressources importantes (par exemple humaines et/ou capacités de calcul) générant des informations de correction.

On note que les modèles de langage comprennent ici :
- les modèles de langage au sens strict (ce qui est le cas, par exemple, lorsque les données, objet de la reconnaissance, sont de type purement textuel);
- les modèles formés d'un ou de plusieurs modèles de langage au sens strict et d'un ou plusieurs ensembles d'unités phonétiques (ce qui correspond notamment au cas général d'une reconnaissance vocale appliquée à des échantillons vocaux).

L'invention va bien au-delà de la simple mise à jour d'un vocabulaire. En effet, il est possible que bien que tous les mots d'une expression figurent au vocabulaire utilisé par le modèle de langage du terminal, cette expression ne soit pas reconnue. Seule la mise à jour du modèle de langage lui-même permet alors de faire reconnaître cette expression ultérieurement. La mise à jour du vocabulaire, qui est une des informations dont le modèle de langage est dérivé, n'est pas suffisante.

Ici, les expressions sont à prendre au sens large et concernent toute expression vocale permettant une interaction entre un terminal et son utilisateur. Les expressions (en anglais «utterance») comprennent notamment les phrases, les locutions, les mots isolés ou non, des mots de codes spécifiques au terminal, des instructions, des commandes...

Les informations de correction peuvent comprendre notamment des informations permettant de modifier partiellement ou complètement le modèle de langage et/ou unités phonétiques présents dans chaque terminal en y supprimant, remplaçant ou ajoutant des éléments.

Le serveur peut recevoir de chaque terminal des données lui permettant d'améliorer le modèle de langage et/ou les unités phonétiques présents dans le terminal émetteur des données mais aussi dans tous les autres terminaux, chacun des terminaux bénéficiant de l'expérience commune acquise par le serveur auprès de tous les terminaux.

Ainsi, l'invention permet de prendre en compte des styles de langage ou des tournures propres à certains utilisateurs (par exemple, l'expression «20 heures du soir » (pléonasme difficilement envisageable a priori) au lieu de «20 heures » ou «8 heures du soir ») et qui n'avait pas été prévus au cours de la construction du modèle de langage mis en oeuvre.

En outre, l'invention prend en compte l'évolution des langues vivantes (nouvelles tournures ou expressions, ...).

On note que l'invention s'applique aussi bien aux modèles de langages de type stochastique qu'aux modèles de langage de type grammaire probabiliste. Lorsque l'invention est appliquée aux modèles de langages de type stochastique, les données de correction sont généralement en grand nombre pour influencer la reconnaissance, alors que les données de correction pour un modèle de type grammaire probabiliste peuvent être peu nombreuses et avoir une influence sensible sur l'efficacité et la fiabilité de la reconnaissance.

Selon une caractéristique particulière, le procédé est remarquable en ce que les données représentatives des expressions non reconnues comprennent un enregistrement vocal compressé représentatif de paramètres descriptifs du signal acoustique.

Ainsi, l'invention permet avantageusement de prendre en compte les données vocales émises à la source pour une analyse fine au niveau du serveur, tout en limitant le volume de données transmis au serveur distant.

Selon une caractéristique particulière, le procédé est remarquable en ce que lors de l'étape de transmission par le terminal, celui-ci transmet en outre au serveur au moins une des informations faisant partie du groupe comprenant :
- des informations de contexte d'utilisation du procédé de reconnaissance vocale lorsqu'une expression n'a pas été reconnue ; et
- des informations relatives au locuteur ayant prononcé une expression non reconnue.

Ainsi, la reconnaissance vocale des expressions non reconnues par le terminal, qui peut être effectuée à distance, est facilitée.

En outre, une vérification de la validité du contenu des expressions non reconnues peut être effectuée en fonction du contexte. (Par exemple, une commande « enregistrement de l'émission » a un sens et est donc valide quand le terminal auquel elle s'adresse est un magnétoscope et n'a pas de sens pour un téléphone mobile).

Selon une caractéristique particulière, le procédé est remarquable en ce qu'il met en oeuvre un cryptage et/ou un embrouillage des données enregistrées et/ou des informations de correction.

Ainsi, les données sont sécurisées efficacement et restent confidentielles.

L'invention concerne également un module de reconnaissance vocale utilisant un modèle de langage, remarquable en ce qu'il comprend :
- un analyseur adapté à détecter des expressions non reconnues ;
- un enregistreur de données représentatives d'au moins une expression non reconnue ;
- un transmetteur adapté à transmettre les données enregistrées vers un serveur distant; et
- un récepteur d'informations de correction permettant la correction du modèle de langage transmis vers le module permettant une reconnaissance future d'au moins certaines des expressions non reconnues par le module, les informations de correction ayant été transmises par le serveur distant après analyse au niveau du serveur distant des données, et après génération d'informations de correction du modèle de langage tenant compte d'au moins une partie des expressions non reconnues.

L'invention concerne aussi un dispositif de reconnaissance vocale utilisant un modèle de langage, remarquable en ce qu'il comprend :
- un analyseur adapter à détecter des expressions non reconnues ;
- un enregistreur de données représentatives d'au moins une expression non reconnue ;
- un transmetteur adapté à transmettre les données enregistrées vers un serveur distant; et
- un récepteur d'informations de correction permettant la correction du modèle de langage transmis vers le dispositif permettant une reconnaissance future d'au moins certaines des expressions non reconnues par le dispositif, les informations de correction ayant été transmises par le serveur distant après analyse au niveau du serveur distant des données, et après génération d'informations de correction du modèle de langage tenant compte d'au moins une partie des expressions non reconnues.

L'invention concerne également un serveur de reconnaissance vocale, la reconnaissance étant mise en oeuvre dans un ensemble d'au moins un terminal distant, utilisant un modèle de langage, remarquable en ce qu'il comprend les moyens suivants :
- un récepteur de données représentatives d'au moins une expression non reconnue par au moins un terminal faisant partie de l'ensemble d'au moins un terminal distant et ayant détecté l'expression non reconnue lors d'une opération de reconnaissance vocale; et
- un émetteur adapté à émettre vers l'ensemble d'au moins un terminal distant, des informations de correction obtenues à partir d'une analyse des données reçues au niveau du serveur, les informations de correction permettant la correction par chacun des terminaux de l'ensemble, du modèle de langage permettant une reconnaissance future d'au moins une partie des expressions non reconnues.

Les caractéristiques particulières et les avantages du module, du dispositif et du serveur de reconnaissance vocale étant similaires à ceux du procédé de reconnaissance vocale, ils ne sont pas rappelés ici.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique général d'un système comprenant un boîtier à commande vocale, dans lequel la technique de l'invention peut être mise en oeuvre ;
- la figure 2présente un synoptique du boîtier de reconnaissance vocale du système de la figure 1 ;
- la figure 3 décrit un schéma électronique d'un boîtier de reconnaissance vocale mettant en oeuvre le synoptique de la figure 2 ;
- la figure 4présente un synoptique du serveur du système de la figure 1 ;
- la figure 5 représente un organigramme du procédé de test d'expression et d'enregistrement de données relatives à des expressions non reconnues tel que mis en oeuvre par le moteur de reconnaissance de la figure 2 ;
- la figure 6 représente un organigramme du procédé d'émission des données relatives à des expressions non reconnues tel que mis en oeuvre par le module de rejet de la figure 2 ;
- la figure 7 représente un organigramme du procédé de réception des données de correction tel que mis en oeuvre par le module de chargement des modèles de langage de la figure 2 ; et
- la figure 8 représente un organigramme du procédé de réception et de traitement des données de correction tel que mis en oeuvre au sein du serveur distant de la figure 4.

Le principe général de l'invention repose donc sur une reconnaissance vocale mise en oeuvre dans des terminaux, le procédé de reconnaissance vocale utilisant un modèle de langage et/ou un ensemble d'unités phonétiques qui peuvent être mis à jour par un serveur distant, quand, notamment, ce dernier le juge nécessaire.

D'une manière générale, chaque terminal peut reconnaître des expressions (par exemple phrase ou commande) formulées par un locuteur et exécuter une action correspondante.

Néanmoins, on constate souvent que certaines expressions tout à fait compréhensibles par un être humain ne sont pas reconnues par le dispositif ou le module mettant en oeuvre la reconnaissance vocale.

L'échec de la reconnaissance peut avoir de multiples raisons :
- vocabulaire utilisé par le locuteur ne faisant pas partie du modèle de langage ;
- prononciation particulière (avec accent par exemple) ;
- tournure d'expression particulière non prévue par le dispositif ou module de reconnaissance vocale ;
- ...

En effet, les modèles de langage et les ensembles d'unités phonétiques sont souvent construits à partir de données statistiques qui prennent en compte des échantillons d'expressions habituellement utilisées par une population typique, certains mots de vocabulaire, prononciations, et/ou tournures de phrases n'étant pas (et ne pouvant pas être) alors pris en compte.

L'invention repose d'abord sur une détection des expressions non reconnues par le module ou dispositif de reconnaissance vocale.

Lorsqu'une expression n'a pas été reconnue, le terminal enregistre des données représentatives du signal correspondant aux expressions non reconnues (telles que, par exemple, un enregistrement numérique vocal de l'expression), en vue de leur émission vers un serveur distant.

Au niveau du serveur distant centralisant les expressions non reconnues d'un ensemble de terminaux, un opérateur humain, peut alors analyser les expressions non reconnues.

Certaines d'entre elles pourront s'avérer incompréhensibles et/ou inexploitables et seront écartées.

En revanche, d'autres seront tout à fait compréhensibles par l'opérateur qui pourra (s'il le juge utile) par relation homme/machine « traduire » ces expressions jusqu'alors non reconnues par les terminaux en un code compréhensible par le serveur.

Le serveur peut alors prendre en compte ces expressions avec leur traduction pour générer des informations de correction du modèle de langage et/ou de l'ensemble d'unités phonétiques.

On notera que correction s'entend ici comme :
- modification du modèle ; et/ou
- complément au modèle.

Le serveur émet alors les informations de correction vers chacun des terminaux qui peut mettre à jour son modèle de langage et/ou ensemble d'unités phonétiques qui sont enrichis de nombreuses expressions non reconnues par lui-même ou par d'autres terminaux.

Ainsi, la reconnaissance vocale de chacun des terminaux s'améliore en bénéficiant de l'expérience commune à tous les terminaux.

Selon un mode particulier de l'invention, l'analyse n'est pas effectuée par un opérateur mais par le serveur lui-même qui peut disposer de ressources beaucoup plus importantes qu'un simple terminal.

Selon des modes particuliers de réalisation, les terminaux émettent vers le serveur des données de contexte (par exemple l'heure, la date, une commande effectuée manuellement ou vocalement après l'échec d'une commande vocale, la localisation, le type de terminal, ...) avec les données représentatives du signal correspondant aux expressions non reconnues.

Ceci peut faciliter le travail d'analyse de l'opérateur et/ou du serveur.

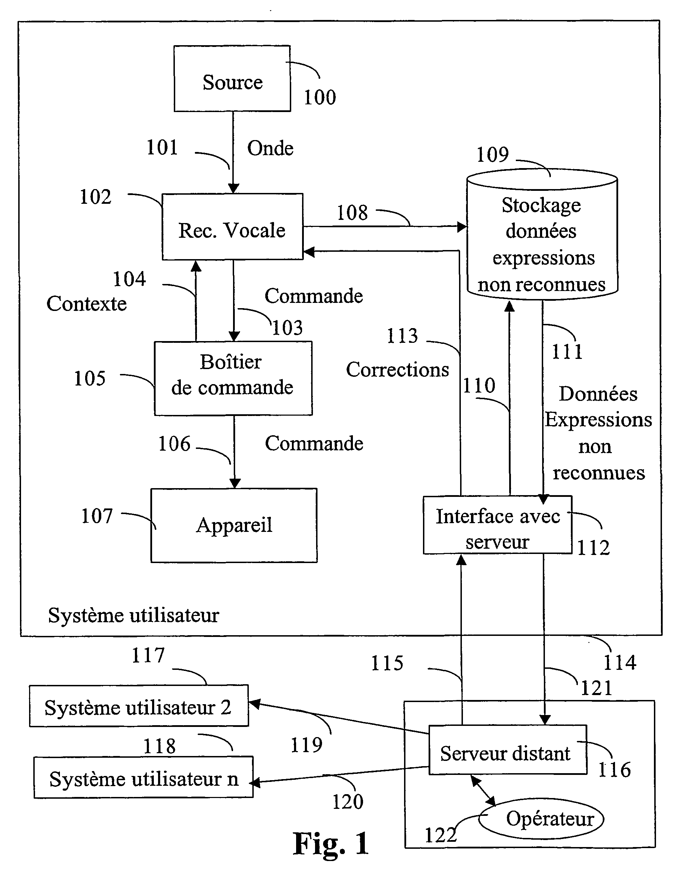

On présente, en relation avec la figure 1, un synoptique général d'un système comprenant un boîtier à commande vocale, dans lequel la technique de l'invention peut être mise en oeuvre.

Ce système comprend notamment:
- un serveur distant 116 contrôlé par un opérateur humain 122 ; et
- une pluralité de systèmes utilisateurs 114, 117 et 118.

Le serveur distant 116 est relié à chacun des systèmes utilisateurs 114, 117 et 118 via des liaisons de communication descendantes respectivement 115, 119 et 120. Ces liaisons peuvent être permanentes ou temporaires et être de tout type bien connu de l'homme du métier. Elles peuvent notamment être de type diffusion et être basées sur des canaux hertziens, satellites ou filaires utilisés par la télévision ou tout autre type comme, par exemple, une liaison de type internet.

La figure 1 décrit en particulier le système utilisateur 114 qui est relié via une liaison 121 de communication montante vers le serveur 116. Cette liaison peut être elle aussi de tout type bien connu de l'homme du métier (notamment téléphonique, Internet, ...).

Le système utilisateur 114 comprend notamment :
- une source vocale 100 pouvant notamment être constituée d'un microphone destiné à capter un signal vocal produit par un locuteur ;
- un boîtier de reconnaissance vocale 102 ;
- un boîtier de commande 105 destiné à piloter un appareil 107 ;
- un appareil commandé 107, par exemple de type téléviseur, magnétoscope ou terminal de communication mobile ;
- une unité de stockage 109 des expressions détectées comme non reconnues ;
- une interface 112 permettant des communications montantes et descendantes vers le serveur 116.

La source 100 est reliée au boîtier de reconnaissance vocale 102, via une liaison 101 qui lui permet de transmettre une onde source analogique représentative d'un signal vocal vers le boîtier 102.

Le boîtier 102 peut récupérer des informations 104 de contexte (telles que par exemple, le type d'appareil 107 pouvant être contrôlé par le boîtier de commande 105 ou la liste des codes de commandes) via une liaison 104 et émettre vers le boîtier de commande 105 des commandes via une liaison 103.

Le boîtier de commande 105 émet des commandes via une liaison 106 par exemple infrarouge, vers l'appareil 107, en fonction des informations qu'il reconnaît selon son modèle de langage et de son dictionnaire.

Le boîtier de commande 105 détecte les expressions qu'il ne reconnaît pas et, au lieu de simplement les rejeter, en émettant un signal de non reconnaissance, il effectue un enregistrement de ces expressions vers l'unité de stockage 109 via une liaison 108.

L'unité de stockage 109 des expressions non reconnues émet des données représentatives vers l'interface 112 via une liaison 111, qui les relaient vers le serveur 116 via la liaison 121. Après une transmission correcte, l'interface 110 peut émettre un signal 110 vers l'unité de stockage 109 qui peut alors effacer les données transmises.

Le boîtier de commande 105 reçoit, par ailleurs, des données de correction de l'interface 112 via une liaison 113, que l'interface 112 a lui-même reçu du serveur distant via la liaison 115. Ces données de correction sont prises en compte par le boîtier de commande 105 pour la mise à jour de modèles de langages et/ou d'ensembles d'unités phonétiques.

Selon le mode de réalisation considéré la source 100, le boîtier de reconnaissance vocale 102, le boîtier de commande 105, l'unité de stockage 109 et l'interface 112 font partie d'un même dispositif et ainsi les liaisons 101, 103, 104, 108, 111, 110 et 113 sont des liaisons internes au dispositif. La liaison 106 est typiquement une liaison sans fil.

Selon une première variante de réalisation de l'invention décrite à la figure 1, les éléments 100, 102, 105, 109 et 112 sont en partie ou complètement séparés et ne font pas partie d'un même dispositif. Dans ce cas, les liaisons 101, 103, 104, 108, 111, 110 et 113 sont des liaisons externes filaires ou non.

Selon une deuxième variante, la source 100, les boîtiers 102 et 105, l'unité de stockage 109 et l'interface 112 ainsi que l'appareil 107 font partie d'un même dispositif et sont reliés entre eux par des bus internes (liaisons 101, 103, 104, 108, 111, 110, 113 et 106). Cette variante est particulièrement intéressante quand le dispositif est, par exemple, un téléphone mobile ou un terminal de télécommunication portable.

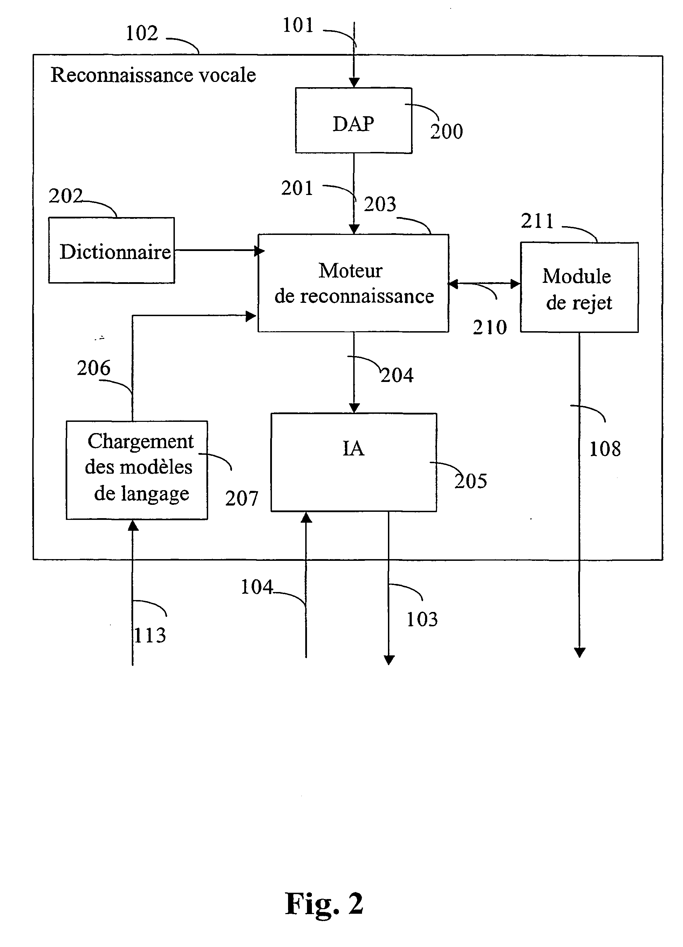

La figure 2 présente un synoptique d'un boîtier à commande vocale tel le boîtier 102 illustré en regard de la figure 2.

On note que le boîtier 102 reçoit de l'extérieur l'onde source analogique 101 qui est traitée par un Décodeur Acoustico-Phonétique 200 ou DAP (appelé « front-end » en anglais). Le DAP 200 échantillonne à intervalle régulier (typiquement toutes les 10ms) l'onde source 101 pour produire des vecteurs réels ou appartenant à des livres de code (ou « code books » en anglais), représentant typiquement des résonances buccales qui sont émises via une liaison 201 vers un moteur de reconnaissance 203. Le DAP est par exemple basé sur une PLP (de l'anglais « Perceptual Linear Prediction» décrit notamment dans l'article «Perceptual Linear Prediction (PLP) analysis of speech » écrit par Hynek Hermansky et publié dans «Journal of the Acoustical Society of America », Vol. 97, N°4, 1990, aux pages 1738-1752.

A l'aide d'un dictionnaire 202, le moteur de reconnaissance 203 analyse les vecteurs réels qu'il reçoit en utilisant notamment des modèles de Markov cachés ou HMM (de l'anglais « Hidden Markov Models ») et de modèles de langage (qui représentent la probabilité pour qu'un mot suive un autre mot). Des moteurs de reconnaissance sont notamment décrits en détail dans le livre «Statistical Methods for Speech Recognition » écrit par Frederick Jelinek, et paru aux éditions MIT Press en 1997.

Le modèle de langage permet au moteur de reconnaissance 203 (qui peut utiliser notamment des réseaux de Markov cachés) de déterminer quels mots peuvent suivre un mot donné de n'importe quelle expression utilisable par le locuteur dans une application donnée, et de donner la probabilité associée. Les mots en question appartiennent au vocabulaire de l'application, qui peut être, indépendamment du modèle de langage, de petite taille (typiquement de 10 à 300 mots), ou de grande taille (par exemple de taille supérieure à 300 000 mots).

La demande de brevet PCT/FR00/03329 en date du 29 novembre 1999 déposée au nom de THOMSON MULTIMEDIA, et publiée sous le numéro de publication WO-A-01/41125, décrit un modèle de langage comportant une pluralité de blocs syntaxiques. L'utilisation de l'invention objet de la présente demande est particulièrement avantageuse en liaison avec ce type de modèle de langage modulaire, car les modules peuvent être mis à jour séparément, ce qui évite un téléchargement de fichiers de volume trop importants.

Les modèles de langages sont transmis par un module 207 de chargement de modèle de langage. Le module 207 reçoit lui-même des modèles de langages, des mises à jour ou des corrections de modèle de langage et/ou d'unités phonétiques transmis du serveur via la liaison 113.

On note que le dictionnaire 202 appartient au modèle de langage faisant référence à des mots du dictionnaire. Ainsi, le dictionnaire 202 lui-même peut être mis à jour et/ou corrigé via un modèle de langage chargé par le module 207.

Après mise en oeuvre d'une opération de reconnaissance basé sur l'utilisation d'un algorithme de Viterbi, le moteur de reconnaissance 203 fournit au module de rejet 211, une liste ordonnée de séquences de mots conformes au modèle de langage, qui présente le meilleur score pour l'expression prononcée.

Le module de rejet 211 travaille en aval du moteur de reconnaissance 203 et fonctionne selon l'un ou plusieurs des principes suivants:
- Parfois, pour des raisons propres à l'algorithme de Viterbi, celui-ci ne peut produire une liste cohérente, parce que les scores sont si faibles que la limite des précisions acceptables de la machine en calcul arithmétique est dépassée. Il n'y a donc pas de proposition complète cohérente. Ainsi, lorsque le module de rejet 211 détecte un ou plusieurs scores inférieurs à une limite acceptable prédéterminée, l'expression est rejetée.
- Chaque élément de la liste calculée par l'algorithme de Viterbi a été retenu parce que le score associé était parmi les plus forts scores relatifs de toutes les expressions possibles, selon le modèle de langage. Par ailleurs, le réseau de Markov associé à chacune de ces expressions permet d'évaluer la probabilité intrinsèque pour que le réseau en question produise l'expression associée avec le score constaté. Le module de rejet 211 analyse cette probabilité et si elle est inférieure à un seuil d'acceptabilité de probabilité, prédéterminé, l'expression est rejetée.
- Selon une autre méthode, pour les meilleures propositions obtenues par l'algorithme de Viterbi, le module de rejet 211 effectue un traitement complémentaire des expressions, en utilisant des critères qui n'avaient pas été pris en compte au cours du développement de Viterbi. Par exemple, il vérifie que les parties du signal devant être voisées parce qu'associées à des voyelles, le sont effectivement. Si les expressions proposées ne remplissent pas ces conditions, elles sont rejetées.

Lorsque le module de rejet 211 rejette une expression, comme précédemment illustré, l'expression est dite non reconnue et un signal indiquant l'expression rejetée est émis vers le moteur de reconnaissance 203. En parallèle, le module de rejet transmet un enregistrement de l'expression non reconnue à l'unité de stockage 109 via la liaison 108.

Le moteur de reconnaissance 203 est chargé de la reconnaissance d'expressions issues du DAP 200 sous forme d'échantillons phonétiques. Ainsi, le moteur de reconnaissance 203 utilise :
- les unités phonétiques pour construire la représentation phonétique d'un mot sous forme d'un modèle de Markov, chaque mot du dictionnaire 202 pouvant posséder plusieurs «phonétisations »; et simultanément
- le modèle de langage au sens strict pour reconnaître des expressions plus ou moins complexes.

Le moteur de reconnaissance 203 fournit des expressions qui ont été reconnues (c'est-à-dire non rejetées par le module 211) et qu'il a identifiées à partir des vecteurs reçus à un moyen 205 de traduction de ces expressions en commandes pouvant être comprises par l'appareil 107. Ce moyen 205 utilise un procédé de traduction à intelligence artificielle qui lui-même prend en compte un contexte 104 fournit par le boîtier de commande 105 avant d'émettre une ou plusieurs commandes 103 vers le boîtier de commande 105.

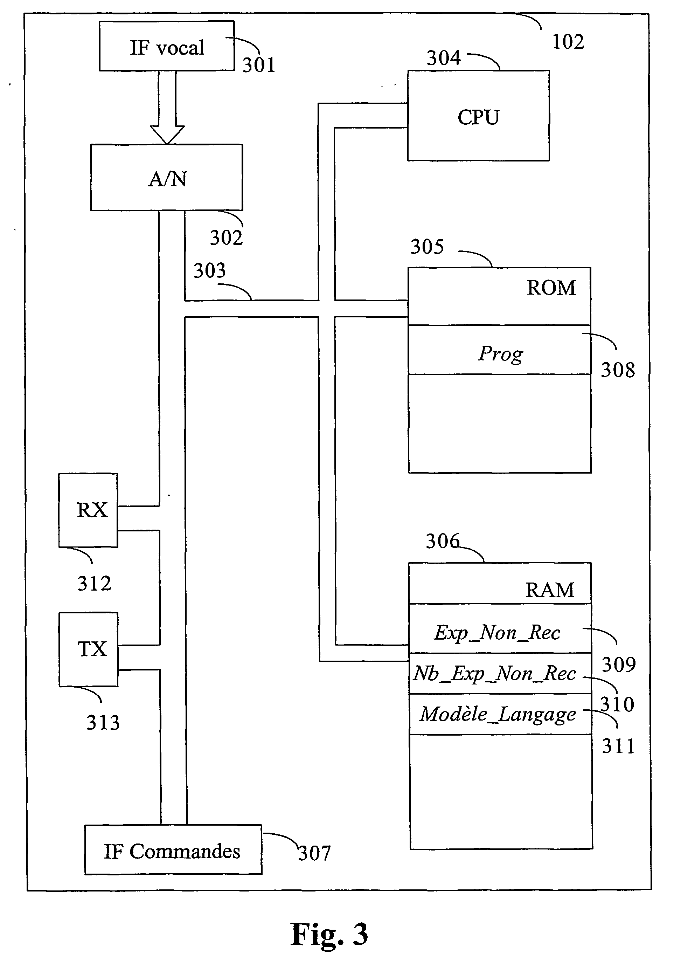

La figure 3 illustre schématiquement un module ou dispositif de reconnaissance vocale 102 tel qu'illustré en regard de la figure 1, et mettant en oeuvre le synoptique de la figure 2.

Le boîtier 102 comprend reliés entre eux par un bus d'adresses et de données:
- une interface vocale 301;
- un convertisseur Analogique-Numérique 302;
- un processeur 3 04 ;
- une mémoire non volatile 305;
- une mémoire vive 306 ;
- un module de réception 312;
- un module de transmission 313 ; et
- une interface d'entrées/sorties 307.

Chacun des éléments illustrés en figure 3 est bien connu de l'homme du métier. Ces éléments communs ne sont pas décrits ici.

On observe en outre que le mot «registre » utilisé dans toute la description désigne dans chacune des mémoires mentionnées, aussi bien une zone de mémoire de faible capacité (quelques données binaires) qu'une zone mémoire de grande capacité (permettant de stocker un programme entier ou l'intégralité d'une séquence de données de transactions).

La mémoire non volatile 305 (ou ROM) conserve notamment le programme de fonctionnement du processeur 304 dans un registre «*prog*» 308.

La mémoire vive 306 conserve des données, des variables et des résultats intermédiaires de traitement dans des registres qui par commodité possèdent les mêmes noms que les données qu'ils conservent et comprend notamment :
- un registre 309 dans lequel sont conservés des enregistrements d'expressions non reconnues, *Exp_Non_Rec* ;
- un compteur 310 de phrases non reconnues *Nb_Exp_Non_Rec* ; et
- un modèle de langage dans un registre 311, *Modèle_Langage.*

On note en outre que les modules de réception 312 et d'émission 313 sont des modules qui permettent la transmission de données respectivement à partir du ou vers le serveur distant 116. Les techniques de réception et d'émission filaires ou sans fil sont bien connues de l'homme du métier des télécommunications et ne seront pas plus détaillées.

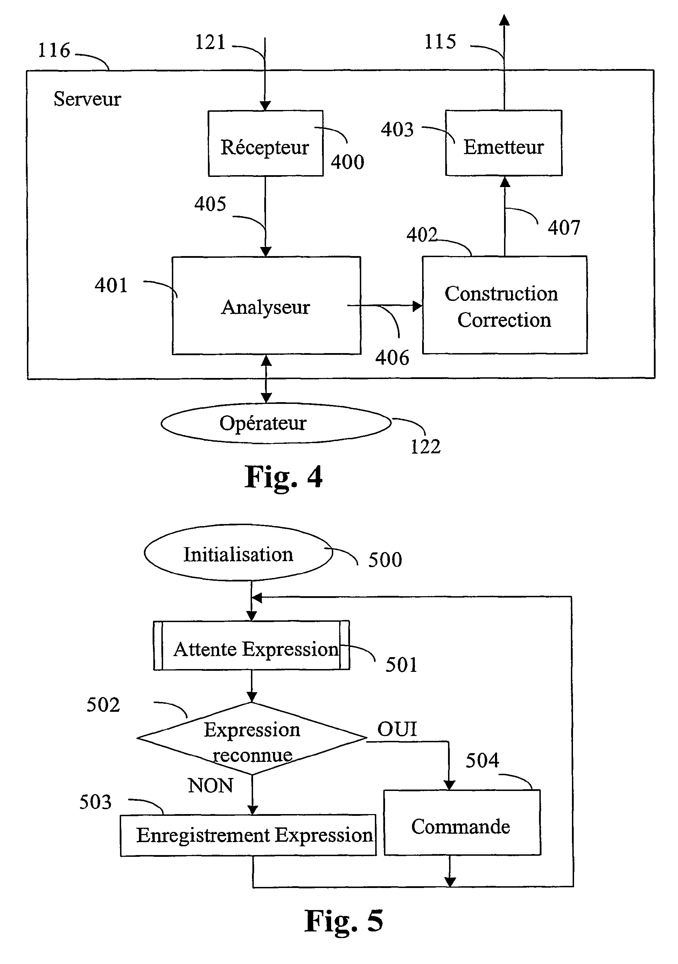

La figure 4 présente le serveur 116 du système illustré en regard de la figure 1.

On note que le serveur 116 est contrôlé par un opérateur humain 122 via une interface homme-machine 404 quelconque (par exemple, de type clavier et écran).

Le serveur 116 comprend lui-même notamment :
- un récepteur 400 ;
- un analyseur 401 ;
- un module 402 de construction de correction de modèle de langage et/ou d'un ensemble d'unités phonétiques ; et
- un émetteur 403.

Le récepteur 400 est compatible avec l'émetteur 313 d'un terminal et peut recevoir de chaque terminal notamment des données représentatives (par exemple enregistrement) d'expressions non reconnues via la liaison 121 et éventuellement des données complémentaires (par exemple contextuelles).

L'analyseur 401 reçoit l'ensemble de ces données du récepteur 400 via une liaison 121 qu'il transmet à l'opérateur 122 via une interface qui est par exemple un terminal muni :
- d'un écran et d'un clavier permettant un dialogue avec le serveur 116 et son contrôle ;
- de haut-parleurs ou casque audio permettant l'écoute des enregistrements non reconnus.

Cette interface permet aussi à l'analyseur 401 de recevoir une information de l'opérateur 122 indiquant :
- qu'une expression non reconnue et non couverte par le modèle de langage reste incompréhensible, n'a pas de sens au sein de l'application au terminal et/ou ne concerne pas le terminal (elle ne doit donc pas être incluse dans le modèle de langage), cette expression étant alors non prise en compte pour la correction du modèle de langage et écartée par l'analyseur 401 ;
- qu'une expression non reconnue appartient néanmoins au modèle de langage au sens strict (il s'agit alors d'un problème de reconnaissance pure) ; dans ce cas, il s'agit de modifier les unités phonétiques et non le modèle de langage au sens strict ; ou
- une traduction sous forme par exemple d'un code de commande, après identification du contenu d'une expression par l'opérateur, l'expression non reconnue n'appartenant pas au modèle de langage et ayant un sens pour le terminal auquel elle était destinée; il s'agit, alors, de corriger le modèle de langage au sens strict.

Une combinaison des deux et troisième solutions est possible ; dans ce cas, il s'agit à la fois de modifier les unités phonétiques et le modèle de langage au sens strict.

Ce mode de réalisation correspond à un traitement manuel des expressions non reconnues. Selon ce mode de réalisation, l'opérateur humain 122 écoute l'expression non reconnue et analyse les raisons de son rejet. L'opérateur 122 détermine notamment si l'expression appartient au modèle de langage ou non. Dans le cas où l'expression appartient au modèle de langage, l'opérateur analyse l'expression pour identifier le problème de reconnaissance intrinsèque (expression appartenant au modèle de langage et qui aurait du être reconnues et qui ne l'a pas été pour des raisons autres : bruit, accent du locuteur...).

Selon une première variante, le traitement est automatique et l'intervention d'un opérateur humain devient nulle. Dans ce cas, le serveur 116 et notamment l'analyseur 401 possèdent une puissance de calcul relativement importante pouvant être notamment beaucoup plus grande qu'un terminal. Selon cette variante, l'analyseur 401 analyse chaque expression non reconnue de manière plus appropriée que ne pourrait le faire un terminal, en utilisant par exemple un modèle de langage plus riche et/ou des modèles phonétiques plus complexes. N'étant pas soumis à des exigences de calcul en temps réel aussi strictes que pourrait l'être un terminal (qui souvent nécessite un temps de réaction rapide à une commande de locuteur), l'analyseur 401 peut aussi, par exemple, permettre une reconnaissance demandant un temps de traitement plus long que dans un terminal.

Selon une deuxième variante, le traitement est semi-automatique et l'intervention d'un opérateur humain reste limitée aux cas non solubles par l'analyseur.

La structure générale d'un serveur 116 est selon le mode préféré de réalisation ici décrit similaire à celle d'un terminal telle que décrite en regard de la figure 3 et comprend notamment reliés entre eux par un bus d'adresses et de données :
- un processeur ;
- une mémoire vive ;
- une mémoire non volatile ;
- un module de transmission adapté ;
- un module de réception ; et
- une interface de relation homme/machine.

Selon la figure 5 représentant un organigramme de test d'expression et d'enregistrement de données relatives à des expressions non reconnues tel que mis en oeuvre par le moteur de reconnaissance 203 de la figure 2, au cours d'une première étape d'initialisation 500, le microprocesseur 304 commence l'exécution du programme 308 et initialise les variables de la mémoire vive 306.

Puis, au cours d'une étape 501 d'attente d'expression, il attend et reçoit une expression émise par un locuteur.

Ensuite au cours d'un test 502, après avoir exécuté une opération de reconnaissance vocale de l'expression reçue, il détermine si l'expression a été reconnue ou non selon un ou plusieurs critères illustrés en regard de la description du module de rejet 211 de la figure 2.

Dans l'affirmative, au cours d'une étape 504 de commande, le terminal 102 prend en compte le résultat de la reconnaissance vocale appliquée à l'expression reçue et exécute une action appropriée telle que par exemple une commande.

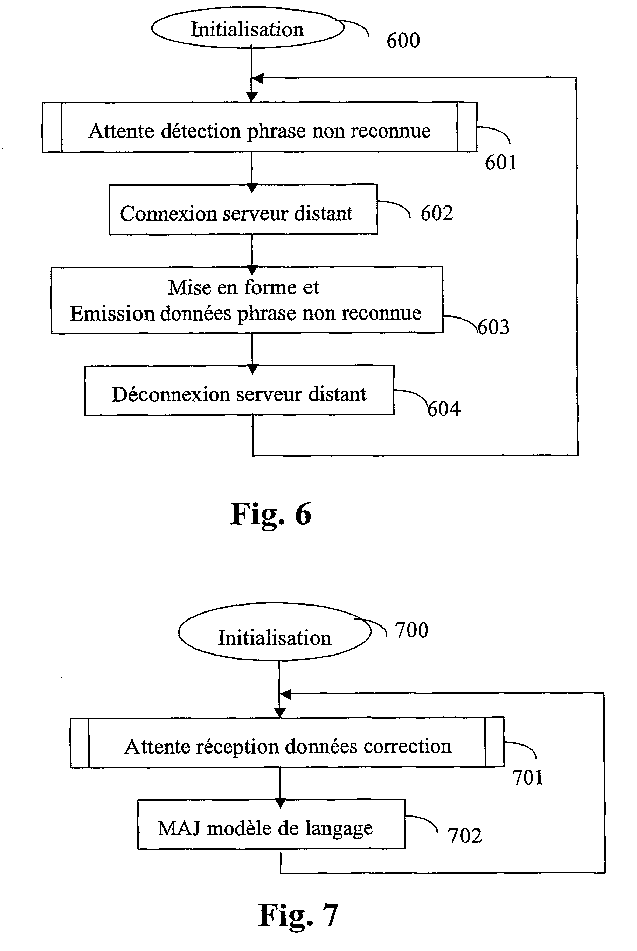

Dans la négative, au cours d'une étape 503 d'enregistrement d'expression, l'expression non reconnue est comprimée et enregistrée dans l'unité de stockage 109 en attente d'une transmission vers le serveur distant 116 comme illustré en regard de la figure 6.

A l'issue de l'une des étapes 503 ou 504, l'étape 501 d'attente d'expression est réitérée.

La figure 6 représentant un organigramme d'émission des données relatives à des expressions non reconnues tel que mis en oeuvre par le module de rejet de la figure 2, au cours d'une première étape d'initialisation 600, le microprocesseur 304 commence l'exécution du programme 308 et initialise les variables de la mémoire vive 306.

Puis, au cours d'une étape 601 d'attente d'expressions non reconnues par le module de reconnaissance vocale 102, le microprocesseur 304 attend puis reçoit des enregistrements d'expressions non reconnues.

Puis, au cours d'une étape 602, le terminal 114 se connecte au serveur distant 116 selon des méthodes bien connues de l'homme du métier des télécommunications.

Ensuite, au cours d'une étape 603, les enregistrements d'expressions non reconnues sont mis en forme et émis vers le serveur distant 116.

Puis, au cours d'une étape 604 de déconnexion, le terminal se déconnecte du serveur distant 116 et un signal est émis entre l'interface 112 avec le serveur distant et l'unité 109 de stockage des données correspondant aux expressions non reconnues indiquant la transmission des enregistrements d'expressions. Les données correspondant à ces expressions sont alors effacées de l'unité de stockage 109.

Ensuite, l'étape 601 est réitérée.

La figure 7 représente un organigramme de réception des données de correction tel que mis en oeuvre par le module 207 de chargement des modèles de langage de la figure 2.

Après une première étape 700 d'initialisation, au cours d'une étape 701, le terminal se met en attente de données de correction diffusée par un serveur 116 vers une pluralité de terminaux.

Ensuite, lors d'une étape 702, le terminal prend en compte les données de corrections pour mettre à jour le modèle de langage et/ou son ensemble d'unités phonétiques utilisés par le module de reconnaissance vocale. Selon la nature des données de corrections, ces données pourront notamment :
- se substituer à des données existantes dans le modèle de langage et/ou son ensemble d'unités phonétiques ;
- modifier des données existantes ;
- compléter des données existantes ; et/ou
- entraîner la suppression de données existantes.

Après l'exécution de l'étape 702, l'étape 703 est réitérée.

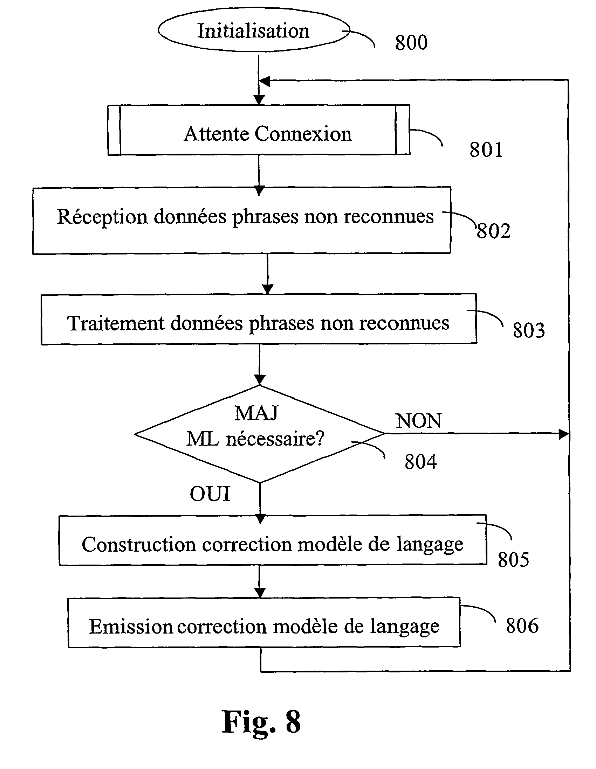

La figure 8 représente un organigramme de réception et de traitement des données de correction tel que mis en oeuvre au sein du serveur distant de la figure 4.

Après une première étape 800 d'initialisation des paramètres et de lancement d'un programme de gestion du serveur, le serveur 116 se met en attente d'une demande de connexion en provenance d'un terminal (qui exécute une étape 602 illustrée en regard de la figure 6) et établit une connexion avec le terminal selon des méthodes bien connues de l'homme du métier des télécommunications.

Puis, au cours d'une étape 802, le serveur 116 reçoit des données en provenance du terminal connecté qui exécute une étape 603 précédemment décrite. Ces données contiennent notamment des enregistrements d'une ou plusieurs expressions rejetées par le terminal parce qu'elles n'ont pas été reconnues par un module de reconnaissance vocale mis en oeuvre dans le terminal. Lorsque toutes les données ont été reçues, la connexion entre le terminal et le serveur 116 est rompue.

Ensuite, au cours d'une étape 803 de traitement des données reçues, au niveau du serveur 116, chacun des enregistrements d'expressions reçus est traité soit manuellement par l'opérateur 122 soit automatiquement ou semi-automatiquement selon différentes variantes illustrées en regard de la figure 4.

Puis, au cours d'un test 804, le serveur 116 détermine si notamment si une ou plusieurs expressions reçues ont pu être comprises et sont pertinentes vis-à-vis du terminal ayant transmis cette ou ces expressions. Une mise à jour des modèles de langages et/ou des unités phonétiques est alors nécessaire.

Dans la négative, l'étape 801 d'attente est réitérée.

Dans l'affirmative, le serveur 116 construit une correction du modèle de langage qui peut prendre plusieurs formes permettant une étape 607 (précédemment illustrée) au sein des terminaux après réception des données de correction. Ces données de correction comprennent notamment :
- un indicateur précisant la nature de la correction (notamment substitution, modification, complément, ou suppression) ; et
- les données de corrections elles-mêmes en fonction de l'indicateur.

On note que si le modèle de langage comporte une pluralité de blocs syntaxiques (cas notamment des modèles de langage tels que décrits dans la demande internationale WO-A-01/41125 mentionnée supra), chaque module peut être corrigé séparément. Dans ce cas, les données de correction comprennent également un indicateur du ou des modules devant être corrigé(s).

Puis au cours d'une étape 806, le serveur 116 diffuse les données de correction vers un ou préférentiellement vers un ensemble de terminaux qui pourront mettre à jour leur modèle de langage et/ou ensemble d'unités phonétiques selon une étape 607.

L'étape 801 est ensuite réitérée.

Le processus est ainsi itératif et peut-être répété plusieurs fois. Il permet également de faire évoluer l'application par ajout de nouvelles requêtes.

Bien entendu, l'invention n'est pas limitée aux exemples de réalisation mentionnés ci-dessus.

En particulier, l'homme du métier pourra apporter toute variante dans la définition des terminaux mettant en oeuvre l'invention, l'invention concernant tout type de dispositif et/ou module utilisant ou pouvant utiliser un procédé de reconnaissance vocale (par exemple être de type terminal multimédia, téléviseur, magnétoscope, un décodeur numérique multimédia (en anglais « *set top box* »), équipement audio ou vidéo, terminal fixe ou mobile, ...).

De même, l'invention concerne tout type de serveur distant (par exemple des serveurs Internet, des équipements couplés à des diffuseurs de programmes de télévision, des équipements couplés à des réseaux de communication mobile, des équipements de fournisseurs de services....).

En outre, selon l'invention, le canal de transmission des données correspondant aux phrases non reconnues et le canal de transmission des données de correction des modèles de langages et/ou d'unités phonétiques sont quelconques et incluent notamment:
- les voies de transmission hertziennes ;
- les voies de transmission satellites ;
- les canaux de réseaux de diffusion de télévision ;
- les canaux de réseaux de type Internet ;
- les canaux de réseaux téléphoniques ;
- les canaux de réseaux mobiles ; et
- les supports amovibles.

De plus, on note que l'invention concerne non seulement des phrases non reconnues mais concerne tout type d'expression vocale telle que par exemple une ou plusieurs phrases, un mot isolé ou non, une locution, un code vocal permettant un dialogue entre une machine et son utilisateur. Ces expressions orales peuvent être associées non seulement à des commandes, mais à tout type de données pouvant faire l'objet d'un dialogue entre une machine et son utilisateur, comme, par exemple, des données d'informations que l'utilisateur peut transmettre à la machine, de configuration, de programmation...

On note également que la méthode de mise à jour des modèles de langage décrite par le brevet s'applique non seulement à des procédés de reconnaissance vocale au sens strict, mais s'applique aussi à procédés de reconnaissance d'entrées textuelles supportant des fautes d'orthographe et/ou de frappe, basés également sur des modèles Markoviens ou des modèles de langage au sens strict tels que décrits dans le brevet.

On notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

L'invention est limitée seulement par la libellé des revendications ci-jointes.

## Revendications

1. Procédé de reconnaissance vocale mis en oeuvre dans au moins un terminal (114), ledit procédé de reconnaissance vocale utilisant un modèle de langage (311), **caractérisé en ce qu'**il comprend les étapes suivantes :
- détection (502) d'au moins une expression non reconnue dans un desdits terminaux ;
- enregistrement (503) dans ledit terminal de données représentatives de ladite expression non reconnue (309) ;
- transmission (603) par ledit terminal desdites données enregistrées vers un serveur distant (116), via un premier canal de transmission (121) ;
- analyse (803) au niveau dudit serveur distant, desdites données et génération (805) d'informations de correction dudit modèle de langage tenant compte d'au moins une partie desdites expressions non reconnues ; et
- transmission (806) via un second canal de transmission (115, 119, 120) dudit serveur vers au moins un terminal (114, 117, 118) desdites informations de correction, afin de permettre une reconnaissance future d'au moins certaines desdites expressions non reconnues.

2. Procédé selon la revendication 1, **caractérisé en ce que** lesdites données représentatives desdites expressions non reconnues (309) comprennent un enregistrement vocal compressé représentatif de paramètres descriptifs du signal acoustique.

3. Procédé selon l'une quelconque des revendications 1 et 2, **caractérisé en ce que** lors de ladite étape de transmission par ledit terminal, celui-ci transmet en outre audit serveur au moins une des informations faisant partie du groupe comprenant :
- des informations de contexte d'utilisation dudit procédé de reconnaissance vocale lorsqu'une expression n'a pas été reconnue ; et
- des informations relatives au locuteur ayant prononcé une expression non reconnue.

4. Procédé selon l'une quelconque des revendications 1 à 3, **caractérisé en ce qu'**il met en oeuvre un cryptage et/ou un embrouillage des desdites données enregistrées et/ou desdites informations de correction.

5. Module de reconnaissance vocale (102) utilisant un modèle de langage, **caractérisé en ce qu'**il comprend :
- un analyseur adapté à détecter expressions non reconnues ;
- un enregistreur de données représentatives d'au moins une expression non reconnue ;
- un transmetteur adapté à transmettre lesdites données enregistrées vers un serveur distant ; et
- un récepteur d'informations de correction permettant la correction dudit modèle de langage transmis vers ledit module permettant une reconnaissance future d'au moins certaines desdites expressions non reconnues par ledit module, les informations de correction ayant été transmises par ledit serveur distant après analyse au niveau dudit serveur distant desdites données, et après génération d'informations de correction dudit modèle de langage tenant compte d'au moins une partie des expressions non reconnues.

6. Dispositif de reconnaissance vocale (102) utilisant un modèle de langage, **caractérisé en ce qu'**il comprend :
- un analyseur adapté à détecter des expressions non reconnues ;
- un enregistreur de données représentatives d'au moins une expression non reconnue ;
- un transmetteur adapté à transmettre lesdites données enregistrées vers un serveur distant ; et
- un récepteur d'informations de correction permettant la correction dudit modèle de langage transmis vers ledit dispositif permettant une reconnaissance future d'au moins certaines desdites expressions non reconnues par ledit dispositif, les informations de correction ayant été transmises par ledit serveur distant après analyse au niveau dudit serveur distant desdites données, et après génération d'informations de correction dudit modèle de langage tenant compte d'au moins une partie des expressions non reconnues.

7. Serveur de reconnaissance vocale (116), ladite reconnaissance étant mise en oeuvre dans un ensemble d'au moins un terminal distant, utilisant un modèle de langage, **caractérisé en ce qu'**il comprend les moyens suivants :
- un récepteur de données représentatives d'au moins une expression non reconnue par au moins un terminal faisant partie dudit ensemble et ayant détecté ladite expression non reconnue lors d'une opération de reconnaissance vocale ; et
- un émetteur adapté à émettre vers ledit ensemble d'au moins un terminal distant, des informations de correction obtenues à partir d'une analyse desdites données reçues au niveau dudit serveur, lesdites informations de correction permettant la correction par chacun des terminaux dudit ensemble, dudit modèle de langage permettant une reconnaissance future d'au moins une partie des expressions non reconnues.

## Claims

1. Voice recognition process implemented in at least one terminal (114), the said voice recognition process using a language model (311), **characterized in that** it comprises the following steps:
- detection (502) of at least one unrecognized expression in one of the said terminals;
- recording (503) in the said terminal of data representative of the said unrecognized expression (309);
- transmission (603) by the said terminal of the said recorded data to a remote server (116), via a first transmission channel (121);
- analysis, (803) at the level of the said remote server, of the said data and generation (805) of information for correcting the said language model taking account of at least one part of the said unrecognized expressions; and
- transmission (806) via a second transmission channel (115, 119, 120) from the said server to at least one terminal (114, 117, 118) of the said correcting information, so as to allow future recognition of at least certain of the said unrecognized expressions.

2. Process according to Claim 1, **characterized in that** the said data representative of the said unrecognized expressions (309) comprise a compressed voice recording representative of parameters descriptive of the acoustic signal.

3. Process according to any one of claims 1 and 2, **characterized in that** during the said step of transmission by the said terminal, the latter furthermore transmits to the said server at least one of the items of information forming part of the group comprising:
- information of context of use of the said voice recognition process when an expression has not been recognized; and
- information relating to the speaker who has uttered an unrecognized expression.

4. Process according to any one of Claims 1 to 3, **characterized in that** it implements an encryption and/or a scrambling of the said recorded data and/or of the said correcting information.

5. Voice recognition module (102) using a language model, **characterized in that** it comprises:
- an analyser suitable for detecting unrecognized expressions;
- a recorder of data representative of at least one unrecognized expression;
- a transmitter suitable for transmitting the said recorded data to a remote server; and
- a receiver of correcting information allowing the correcting of the said language model transmitted to the said module allowing future recognition of at least certain of the said unrecognized expressions by the said module, the correcting information having been transmitted by the said remote server after analysis at the level of the said remote server of the said data, and after generation of information for correcting the said language model taking account of at least one part of the unrecognized expressions.

6. Voice recognition device (102) using a language model, **characterized in that** it comprises:
- an analyser suitable for detecting unrecognized expressions;
- a recorder of data representative of at least one unrecognized expression;
- a transmitter suitable for transmitting the said recorded data to a remote server; and
- a receiver of correcting information allowing the correcting of the said language model transmitted to the said device allowing future recognition of at least certain of the said unrecognized expressions by the said device, the correcting information having been transmitted by the said remote server after analysis at the level of the said remote server of the said data, and after generation of information for correcting the said language model taking account of at least one part of the unrecognized expressions.

7. Voice recognition server (116), the said recognition being implemented in a set of at least one remote terminal, using a language model, **characterized in that** it comprises the following means:
- a receiver of data representative of at least one expression unrecognized by at least one terminal forming part of the said set and having detected the said unrecognized expression during a voice recognition operation; and
- a sender sending to the said set of at least one remote terminal correcting information obtained on the basis of an analysis of the said data received at the level of the said server, the said correcting information allowing the correcting by each of the terminals of the said set, of the said language model allowing future recognition of at least one part of the unrecognized expressions.

## Patentansprüche

1. Verfahren zur Spracherkennung, das in mindestens einem Endgerät (114) eingesetzt wird, wobei das Verfahren zur Spracherkennung ein Sprachmodell (311) verwendet, **dadurch gekennzeichnet, dass** es die folgenden Schritte umfasst:
- Ermittlung (502) von mindestens einer in einem der Endgeräte nicht erkannten Äußerung,
- Aufzeichnung (503) von für die nicht erkannte Äußerung (309) repräsentativen Daten in dem Endgerät,
- Übertragung (603) der aufgezeichneten Daten von dem Endgerät zu einem abgesetzten Server (116) über einen ersten Übertragungskanal (121),
- Analyse (803) der Daten an dem abgesetzten Server und Erzeugung (805) von Informationen zur Korrektur des Sprachmodells unter Berücksichtigung von mindestens einem Teil der nicht erkannten Äußerungen und
- Übertragung (806) der Korrekturinformationen von dem Server zu mindestens einem Endgerät (114, 117, 118) über einen zweiten Übertragungskanal (115, 119, 120), um eine künftige Erkennung von mindestens manchen der nicht erkannten Äußerungen zu ermöglichen.

2. Verfahren nach Anspruch 1, **dadurch gekennzeichnet, dass** die für die nicht erkannten Äußerungen repräsentativen Daten (309) eine komprimierte Sprachaufzeichnung umfassen, die für das akustische Signal beschreibende Parameter repräsentativ ist.

3. Verfahren nach einem der Ansprüche 1 und 2, **dadurch gekennzeichnet, dass** bei dem Schritt der Übertragung durch das Endgerät dieses zu dem Server ferner mindestens eine der Informationen überträgt, die zu der Gruppe mit
- Informationen über den Kontext der Verwendung des Spracherkennungsverfahrens, wenn eine Äußerung nicht erkannt wurde, und
- Informationen über den Sprecher, der eine nicht erkannte Äußerung gesprochen hat,
gehört.

4. Verfahren nach einem der Ansprüche 1 bis 3, **dadurch gekennzeichnet, dass** es eine Verschlüsselung oder ein Scrambling der aufgezeichneten Daten und/oder der Korrekturinformationen einsetzt.

5. Spracherkennungsmodul (102), das ein Sprachmodell verwendet, **dadurch gekennzeichnet, dass** es Folgendes umfasst:
- einen Analyzer, der geeignet ist, um nicht erkannte Äußerungen zu ermitteln,
- einen Aufzeichner von für mindestens eine nicht erkannte Äußerung repräsentativen Daten,
- einen Transmitter, der geeignet ist, um die aufgezeichneten Daten zu einem abgesetzten Server zu übertragen und
- einen Empfänger von Korrekturinformationen, die die Korrektur des Sprachmodells ermöglichen, das zu dem Modul übertragen wird, das eine künftige Erkennung von mindestens manchen der von dem Modul nicht erkannten Äußerungen ermöglicht, wobei die Korrekturinformationen von dem abgesetzten Server nach Analyse der Daten an dem abgesetzten Server und nach Erzeugung von Informationen zur Korrektur des Sprachmodells unter Berücksichtigung von mindestens einem Teil der nicht erkannten Äußerungen übertragen worden sind.

6. Vorrichtung zur Spracherkennung (102), die ein Sprachmodell verwendet, **dadurch gekennzeichnet, dass** sie Folgendes umfasst:
- einen Analyzer, der geeignet ist, um nicht erkannte Äußerungen zu ermitteln,
- einen Aufzeichner von für mindestens eine nicht erkannte Äußerung repräsentativen Daten,
- einen Transmitter, der geeignet ist, um die aufgezeichneten Daten zu einem abgesetzten Server zu übertragen und
- einen Empfänger von Korrekturinformationen, die die Korrektur des Sprachmodells ermöglichen, das zu der Vorrichtung übertragen wird, die eine künftige Erkennung von mindestens manchen der von der Vorrichtung nicht erkannten Äußerungen ermöglicht, wobei die Korrekturinformationen nach Analyse der Daten an dem abgesetzten Server und nach Erzeugung von Informationen zur Korrektur des Sprachmodells unter Berücksichtigung von mindestens einem Teil der nicht erkannten Äußerungen von dem abgesetzten Server übertragen worden sind.

7. Spracherkennungsserver (116), wobei die Erkennung in einer Anordnung aus mindestens einem abgesetzten Endgerät eingesetzt wird, welches ein Sprachmodell verwendet, **dadurch gekennzeichnet, dass** er folgende Mittel umfasst:
- einen Empfänger von Daten, die für mindestens eine Äußerung repräsentativ sind, die von mindestens einem Endgerät nicht erkannt wird, das zu der Anordnung gehört und die nicht erkannte Äußerung bei einem Spracherkennungsvorgang ermittelt hat, und
- einen Sender, der geeignet ist, zu der Anordnung aus mindestens einem abgesetzten Endgerät Korrekturinformationen zu senden, die aus einer Analyse der am Server empfangenen Daten erhalten werden, wobei die Korrekturinformationen die Korrektur des eine künftige Erkennung von mindestens einem Teil der nicht erkannten Äußerungen ermöglichenden Sprachmodells durch jedes der Endgeräte der Anordnung ermöglichen.
